# EUROPEAN PATENT APPLICATION

(11) **EP 2 672 603 A1**
(43) Date of publication of application: **11.12.2013**
(21) Application number: 12460029.7
(22) Date of filing: 06.06.2012
(51) Int. Cl.: H02J 3/14, H02J 3/26

(54) **A device for connecting a single-phase device into a multiphase electric network**

(71) Applicant: ABB Technology AG, 8050 Zürich (CH)
(72) Inventor: Ruszczyk, Adam, 30-316 Krakow (PL); Wojcik, Mariusz, 32-552 Plaza (PL)
(74) Representative: Chochorowska-Winiarska, Krystyna

(57) **Abstract**

The invention relates to a device for connecting a single-phase electric device into a multiphase electric network, especially a three-phase network which supplies in particular single-phase electric devices connected to the supply network in many points of this network through single-phase electric sockets. The device (1) is connected with the phases (L1, L2, L3) of the supply network at the input and it is equipped with an electric socket (5) for connecting single-phase electric devices (2a) or (2b) in it, and it comprises a single-phase phase switch (4) for phase selection connected with a control unit (7). An executive unit (8) of the single-phase switch (4) for phase selection is electrically connected with a conductor (L) supplying the single-phase socket (5) and with one of the phases of the supply line (L1, L2, L3) through terminals (A', B', C') and it is coupled with the control unit (7) which is adapted to set signals that control the position of the executive element of the switch (4). The device (1) is characterized in that it comprises phase voltage meters (3) which are connected into the supply lines (L1, L2, L3) before the terminals (A', B', C') and they are connected with the control unit (7) to which there is also connected a current measuring device (6) connected with the wire (L) which supplies the single-phase socket (5).

## Description

The invention deals with a device for connecting a single-phase electric device into a multiphase electric network, especially a three-phase network, which supplies in particular single-phase electric devices connected to the supply network in many points of this network through single-phase electric sockets. The device is applicable in places such as parking lots where there is a large number of single-phase loads connected to a three-phase network like battery-charging stations for electric vehicles, and in places such as parking lots and buildings equipped with a three-phase electric network into which a single-phase sources of electric energy are connected such as photovoltaic panels, small wind turbines, fuel cells, or electric energy storages.

Unbalanced load of a three-phase supply network is of major importance both to end users and power utilities. Unbalanced load in the three-phase network may lead to overload of the network elements such as: suppiy lines, conductors, caules, protesting devices and three-phase transformers, even if the power absorbed from a three-phase network is less than the rated power of the three-phase network. Unbalanced load of the three-phase output of three-phase distribution transformer results in a saturation of parts of the magnetic circuit and an increase of internal losses in the transformer core and windings. In order to avoid failures caused by unbalanced load of the supply network the utility is forced to install electric equipment of parameters exceeding than those resulting from the total power required by supplied consumers, and also to use more expensive transformers that have bigger immunity to the unbalanced load. Unbalanced load of a three-phase network causes asymmetry of phase voltages in the power grid from which other consumers are supplied. Supplying three-phase motors with asymmetric three-phase voltage cause vibration and overheat following to failures. Unbalanced load of the power grid increases also the probability of occurrence of unexpected power failures resulting in a partial or total lack of electricity. For end users, it means unexpected interruptions of power supply, for utility, possible damage to transmission infrastructure elements, such as distribution transformers or supply lines.

Patent description US 7 242 110 discloses a system for balancing load in the three-phase power network. The presented system measures currents flowing in individual phases A, B and C at the secondary side of a transformer and sends the results of measurements to the control system in which a zero-sequence component is calculated based on measured currents. The zero-sequence component of currents that has been calculated in this way is compared with the threshold level preset by the user to allow the control system to make a decision about the necessity of change in the distribution of loads between individual phases. If it is necessary to change the load, current amplitudes in individual phases A, B, C are compared with one another, that is A with B, B with C and A with C, and the results are used to define the distribution of phase connections, and the phases with the largest and the least load are determined. The control unit, based on mathematical calculations made on data obtained from measurements and accumulated in the control unit database as well data obtained from auxiliary measurements located in executive units which measure the loads of individual consumers connected to the supply network, determines the phase which should be switched over and sends a control signals to the executive units. The switch of the executive unit switches individual phases on or off. The executive unit sends a feedback signal to the control unit which causes resetting of the counter of alarm signal warning about the occurrence of the unbalanced load of the three-phase network. The process of balancing three-phase network load is completed when the zero-sequence current component is reduced below the threshold level preset by the user.

The described system has the inconvenience as it is designed for balancing loads in a three-phase network but only for a strictly defined group of consumers without taking into consideration the load unbalance caused by other consumers connected to the same grid. Another disadvantage is the necessity to install a large number of current measurement devices to measure output currents in each phase of the secondary side of the transformer and input currents of each consumer in each phase of the three-phase network.

The device according to the invention is designed for connecting a single-phase electric device into a multiphase electric network. The device is connected with the phases L1, L2, L3 of the supply network at the input and is equipped with an electric socket for connecting single-phase electric devices at the output. The device comprises a single-phase switch for phase selection which is connected with the control unit. The single-phase switch comprises an executive unit which is electrically connected with a wire L supplying a single-phase socket and with one of phases L1, L2, L3 of the supply network through terminals A', B', C' and it is coupled with the control unit which is adapted to set signals that control the position of the executive unit of the single-phase switch. The device according to the invention comprises phase voltages meters which are connected to the lines L1, L2, L3 between terminals A, B, C and A', B', C' respectively and they are connected with the control unit to which there is connected also a current measuring device connected with the wire L which supplies the single-phase electric socket.

Preferably the control unit comprises a communication interface for communication with other devices for connecting other single-phase electric devices into a multiphase electric network.

Preferably the control unit (7) comprises a processor with a memory.

Preferably the device according to the invention is located in the housing of the electric socket.

Preferably the executive unit of the single-phase switch for phase selection comprises an executive element in the form of an electromechanical or power electronics device.

Preferably the controi unit is adapted to receive value of measured current which is supplying a single-phase device which is an electric energy receiver connected to the electric socked.

Preferably the control unit is adapted to receiving value of measured current which is coming from a single-phase device which is a source of electric energy in the form of a photovoltaic panel, a wind turbine, a fuel cell or electric energy storage connected to the electric socked.

The device according to the invention is designed for an individual single-phase load. A phase that is the least loaded by other loads installed in the three-phase network is automatically selected on the basis of the measurement of voltages of the supply network. The device does not need information about the values of the currents in individual phases outgoing from the transformer or information about the values of currents absorbed from particular phases by the other particular loads. Single-phase receivers of electric energy with the devices according to the invention can be freely connected to the same three-phase supply network. The balanced distribution of load takes place automatically and autonomously. The use of only voltage measurements causes that its functioning does not depend upon the current shape or the type of absorbed power.

The application of the device results in the balanced distribution of single-phase loads/power sources among the three phases of the supply network, which in turn results in a better utilization of transformers and supply lines of the distribution network and does not lead to an unnecessary oversizing of the installation.

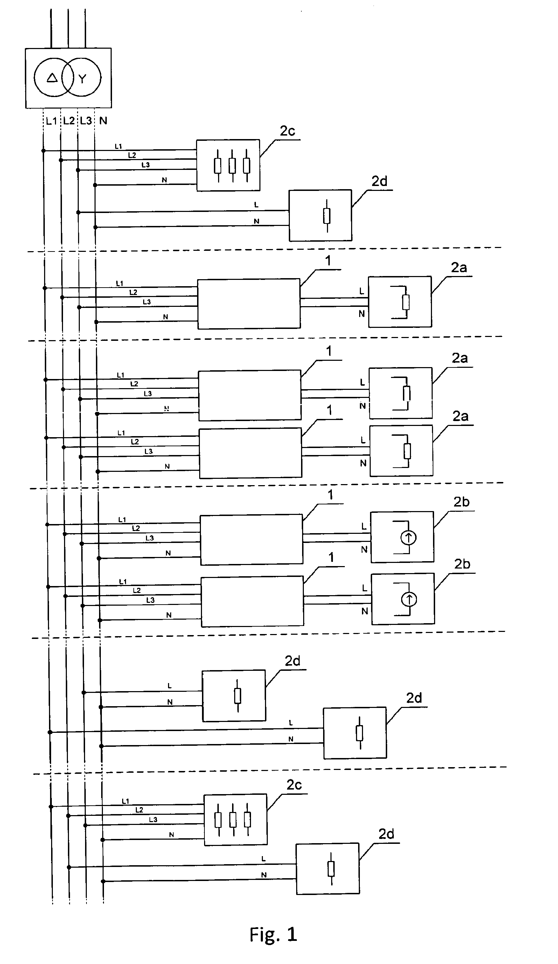

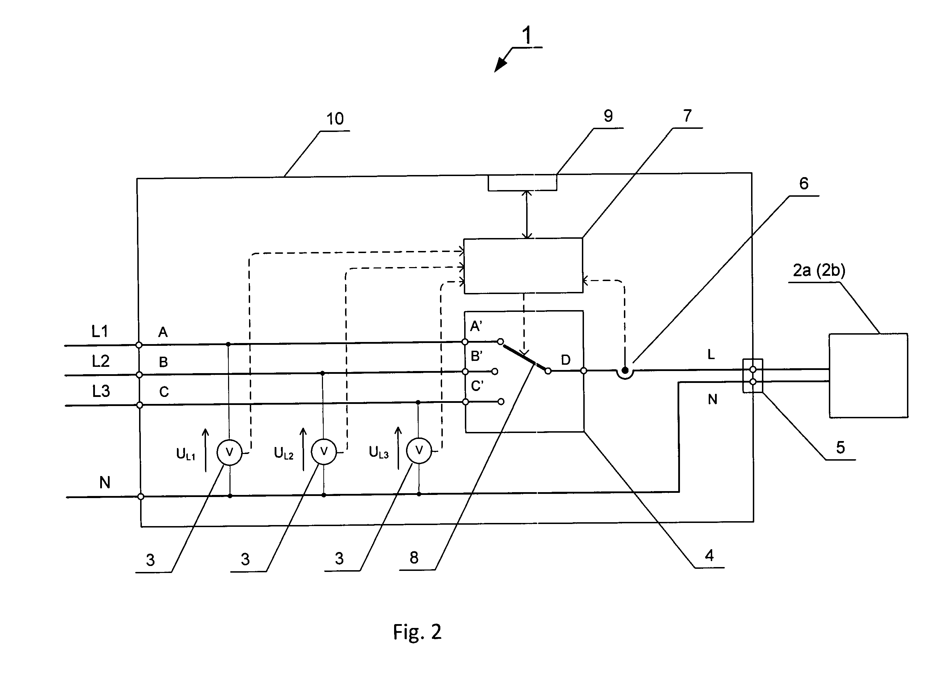

The device for connecting a single-phase electric device into a multiphase electric network according to the invention is illustrated by an embodiment in the drawing where fig. 1 shows schematically a fragment of a three-phase distribution network with distributed electric devices in the form of single-phase and three-phase receivers of electric energy and single-phase energy sources, and fig. 2 shows the device for the execution of the invention in a schematic depiction.

A distribution transformer, on its secondary side, is connected with a three-phase, four-wire distribution network L1, L2, L3, N. Devices 1 according to the invention are connected to the phases L1, L2, L3 and to the neutral wire N of the distribution network. Single-phase loads 2a or single-phase power sources 2b are connected to the devices 1 by means of wires L and N in such way that each single-phase load 2a or single-phase power source 2b is connected with one, selected device 1. Three-phase loads 2c and single-phase loads 2d are also connected to the phases L1, L2, L3 and to the neutral wire N of the distribution network, the single-phase loads 2d being permanently connected with any one of the phases L1, L2 or L3 of the distribution network and with the neutral wire N. Places where the devices 1, the three-phase loads 2c and the single-phase loads 2d are connected to the distribution network can be freely chosen.

The device 1 for connecting a single-phase load 2a or a single-phase source of electric energy 2b with a three-phase supply network L1, L2, L3, N has three supply inputs A, B, C connected to the three phases of the supply network L1, L2, L3 respectively and one input N connected to the neutral line N of the three-phase supply network. To each of the supply lines L1, L2, L3 there are connected phase voltage meters 3 which measure the voltages U_{L1}, U_{L2}, U_{L3} respectively of L1, L2, L3 phases in relation to the neutral wire N. The three supply inputs A, B, C are connected with three inputs A', B', C' respectively of a single-phase switch 4 for a phase selection. An output D of the switch 4 is connected through a single-phase wire L with an electric socket 5 to which the single-phase load 2a or the single-phase energy source 2b is connected. The electric socket 5 is connected also with the wire of the neutral line N. To the single-phase wire L the current-measuring device 6 is connected which is also connected to a control unit 7 comprising a processor with a memory and other necessary modules, not shown in the drawing. The outputs of the phase voltage meters 3 are also connected to the control unit 7. The output of the control unit 7 is electrically connected to an executive unit 8. The executive unit 8 comprises an executive element in the form of a known electromechanical or power electronics device, not shown in the drawing. The executive unit 8 connects one of the inputs A', B' or C' with the output D of the switch 4 depending on the value of the output signal sent from the control unit 7. The control unit 7 is also connected with a communication interface 9 through which the system can communicate with other devices 1 or with the master control unit not shown in the drawing. Through the communication interface 9 the control unit 7 can exchange data about the actual operating state of the device 1, about the type of the connected single-phase device 2a or 2b, and about the value of the load of the connected device 2a or 2b. The master control unit can transmit rules defining the way of switching over the device 1 in order to avoid simultaneous quick switchovers in several devices 1 at the same time. The device 1 is closed in a housing 10. In particular, the housing 10 can be at the same time the housing of the socket 5.

The device 1 according to the invention is permanently connected with a three-phase, four-wire supply network. To the same supply network can be connected other three-phase loads 2c, other single-phase loads 2d or the devices 1, which unevenly load the three-phase supply network. The device 1 measures the values of the voltages U_{L1}, U_{L2}, U_{L3} of the phases L1, L2, L3 respectively in relation to the neutral wire N by means of phase voltage meters 3. The values of the measured voltages U_{L1}, U_{L2}, U_{L3} are compared with one another by the control unit 7. On the basis of the results of the comparison, the control unit 7 assumes that the least loaded phase is the phase whose voltage value is the largest - for example the phase L1, and the most loaded phase is assumed to be the phase whose voltage value is the least - for example the phase L3. At the moment of connection of a single-phase device to the electric socket 5, the control unit 7 measures, on the basis of measurement of current from the device 6 and measurement of voltages from voltage meters 3, apparent power flowing through the device 1 and the phase displacement between the current measured by the device 6 and the voltage measured by the voltage meter 3. On the basis of the calculated apparent power and of the phase displacement, the control device 7 identifies whether the single-phase device connected to the socket 5 is a single-phase load 2a or a single-phase energy source 2b, and in consequence it sends a release signal to the switch 4 which activates the executive element of the switch 4, which is followed by automatic connection of the wire L to the proper line L1, L2 or L3. If a single-phase energy load 2a has been connected to the electric socket 5 of the device 1, the control unit 7 through the executive unit 8 will change the state of the switch 4 to such state in which the single-phase load 2a will be connected to the phase determined by the control unit 7 as the least loaded - for example the phase L1. If a single-phase source of electric energy 2b has been connected to the electric socket 5 of the device 1, the control unit 7 through the executive unit 8 will change the state of the switch 4 to such state in which the single-phase load 2a will be connected with the phase determined by the control unit 7 as loaded the most - for example the phase L3. The control unit 7 stores information about the values of the impedances Z₁, Z₂, Z₃ of supply lines of the phases L1, L2, L3 respectively in the internal memory of the processor. On the basis of continuous measurement of the value of the current flowing through the wire L in the device 1 and the values of the impedances Z₁ Z₂, Z₃ stored in the internal memory, the control unit 7 calculates the voltage drop caused by the connection of the single-phase device 2a or 2b in the supply network phase selected by the switch 4 - for example ΔU_{L1} caused by the connection of the single-phase load 2a to the phase L1. In addition, the control unit 7 calculates voltage drops in the other phases of the supply network - as an instance ΔU_{L2} and ΔU_{L3}, which would be caused by connecting to them a single-phase devise 2a or 2b. The control unit 7 permanently monitors the values of voltages U_{L1}, U_{L2}, U_{L3} in the supply network. If, due to a change in the number or power of loads connected to the same supply network, there is a change in the values of the voltages, the device 1 will determine again the least loaded phase of the supply network - by way of example L2, and the most loaded phase of the supply network - by way of example L1. The control unit 7 conducts a series of computations in which it determines a new configuration of the switch 4, such which will cause connection of the single-phase load 2a to currently the least loaded phase or new connection of the single-phase energy source to currently the most loaded phase. The control unit 7 can communicate through the communication interface 9 with the master control unit to exchange data about the current operating state of the device 1, about the type of the connected single-phase device 2a or 2b, and about the value of the load of the connected device 2a or 2b. The master control unit can transmit rules which define the way of switching over the device 1 in order to avoid simultaneous quick switchovers in several devices 1 at the same time.

List of markings in the drawing
1 - the device for connecting a single-phase electric device into a multiphase electric network,
2a - single-phase load
2b - single-phase energy source
2c - other three-phase load
2d - other single-phase load
3 - phase voltage meter
4 - single-phase switch
5 - electric socket
6 - current measuring device
7 - control unit
8 - executive unit
9 - communication interface
10 - housing.

## Claims

1. A device for connecting a single-phase electric device into a multiphase electric network, especially a three-phase network, connected at input with the phases of the supply network (L1, L2, L3) and provided with an electric socket (5) for connecting in it single-phase electric devices (2a) or (2b) and comprising a single-phase phases selector switch (4) connected with a control unit (7), and the executive unit (8) of the single-phase phase selector switch (4) is electrically connected with a wire (L) which supplies the single-phase socket (5) and with one of the phases of the supply line (L1, L2, L3) through terminals (A', B', C') and it is coupled with the control unit (7) which is adapted to set signals that control the position of the executive element of the executive unit (8), **characterized in that** it comprises phase voltage meters (3), which are connected into the supply lines (L1, L2, L3) before the terminals (A', B', C') and they are connected with the control unit (7) to which there is connected a current measuring device (6) connected with the wire (L) which supplies the single-phase socket (5).

2. The device according to claim 1, **characterized in that** the control unit (7) comprises a communication interface (9) for communication with other devices for connecting a single-phase electric device into a multiphase electric network.

3. The device according to claim 1 or 2, **characterized in that** the control unit (7) comprising a processor with a memory.

4. The device according to any of the claims 1-3, **characterized in that** it is located in the housing (10) of the electric socket (5).

5. The device according to any claims 1-4, **characterized in that** the executive unit (8) of the single-phase phase selector switch (4) comprises an executive element in the form of an electromechanical or power electronics device.

6. The device according to any claims 1-5, **characterized in that** the control unit (7) is adapted to receive value of measured current from a single-phase device (2a) which is a power load.

7. The device according to any claims 1-6, **characterized in that** the control unit (7) is adapted to receive value of measured current from a single-phase device (2b) which is a source of electric energy in the form of a photovoltaic panel, a wind turbine, a fuel cell or an electric energy storage.
